# EUROPEAN PATENT SPECIFICATION

(11) **EP 0 715 920 B1**
(45) Date of publication and mention of the grant of the patent: **08.09.1999**
(21) Application number: 95308607.1
(22) Date of filing: 29.11.1995
(51) Int. Cl.: B23H 7/06, B23H 7/04

(54) **Wire cutting electrical discharge machining apparatus**
Funkenerosionsdrahtschneidemaschine
Appareil pour usinage par électroérosion par fil

(30) Priority: 06.12.1994 JP 30189294
(43) Date of publication of application: 12.06.1996
(73) Proprietor: FANUC LTD., Minamitsuru-gun, Yamanashi 401-05 (JP)
(72) Inventor: Kita, Yuki, Fanuc Mansion Harimomi 10-203, Minamitsuru-gun, Yamanashi 401-05 (JP); Takayama, Yushi, Fanuc No. 3 Villa Karamatsu, Minamitsuru-gun, Yamanashi 401-05 (JP); Ishihara, Mitsuyoshi, Fanuc No. 3 Villa Karamatsu, Minamitsuru-gun, Yamanashi 401-05 (JP)
(74) Representative: Brunner, Michael John

(56) References cited:
- DE-A- 2 900 557
- PATENT ABSTRACTS OF JAPAN vol. 014 no. 231 (M-0974) ,16 May 1990 & JP-A-02 059218 (MITSUBISHI ELECTRIC CORP) 28 February 1990,

## Description

This invention relates to an improvement applicable to a wire cutting electrical discharge machining apparatus which is equipped with a means for inclining a wire electrode for the purpose to make the wire cutting electrical discharge machining apparatus employable for taper machining. More specifically, this inention relates to an improvement developed for avoiding inaccurate machining which is caused by displacement of an upper wire guide, which displacement is caused by elastic deformation or bending of an upper wire guide supporting arm which supports the upper wire guide.

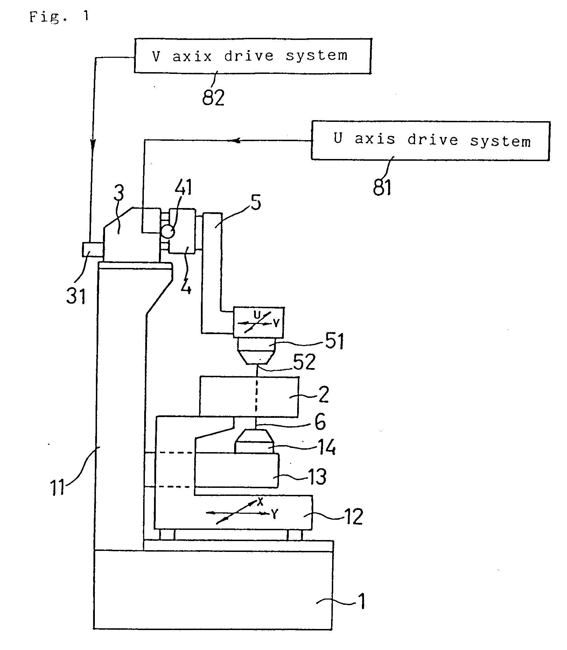

One example of a wire cutting electrical discharge machining apparatus which is employable for taper machining and which is available in the prior art is illustrated in Fig. 1.

Referring to Fig. 1, a wire electrode 6 is extended between an upper wire guide 51 which is supported by an upper wire guide supporting arm 5 and a lower wire guide 14 which is supported by a lower wire guide supporting arm 13. The upper wire guide supporting arm 5 is supported by a U axis table 4 which is slidably supported by a V axis saddle 3 which is slidably supported by a column 11. The U axis table 4 is allowed to move along the vertical side surface of the V axis saddle 3 in the direction along the U axis or back and forth in the drawing (from side to side, when seen from the front of the wire cutting electrical discharge machining apparatus). The U axis table 4 is driven by a U axis driving motor 41. The V axis saddle 3 is allowed to move along the top surface of the column 11 in the direction along the V axis or from side to side in the drawing (back and forth, when seen from the front of the wire cutting electrical discharge machining apparatus). The V axis saddle 3 is driven by a V axis driving motor 31. The lower wire guide supporting arm 13 horizontally extends from the column 11. An X-Y table 12 is allowed to move on a bed 1 and supports a work 2.

When electric discharge machining is conducted, the X-Y table 12 is moved to trace a horizontal route which represents the horizontal shape of a finished work, and the work 2 is caused to approach the wire electrode 6, while an electric voltage is applied between the wire electrode 6 and the work 2 and while a machining liquid is spouted along the wire electrode 6 toward the work 2 from the lower end 52 of the upper wire guide 51 and the upper end (not marked) of the lower wire guide 14. Since the work 2 is required to be soaked in the machining liquid during a period in which electric discharge machining is conducted, the X-Y table 12 is placed in a machining liquid basin (not shown).

When the work 2 has sufficiently approached the wire electrode 6, electric discharge happens between the work 2 and the wire electrode 6 in the machining liquid, and the work 2 is machined by the electric discharge, to realize the horizontal shape which is represented by the traveling route of the work 2.

When taper machining which is defined as a type of electric discharge machining by which a finished work having an inclined side is produced is conducted, the wire electrode 6 is inclined. To incline the wire electrode 6, the vertical location of the upper wire guide 51 is deviated from the vertical location of the lower wire guide 14. To fulfill this requirement, a U axis drive system 81 and a V axis drive system 82 are employed. The U axis drive system 81 is a drive system to move the U axis table 4 along the U axis or back and forth in the drawing (from side to side, when seen from the front) by a distance which equals the distance with which the upper wire guide 51 is required to deviate from the lower wire guide 14 along the U axis. The V axis drive system 82 is a drive system to move the V axis saddle 3 along the V axis or from side to side in the drawing (back and forth, when seen from the front) by a distance which equals the distance with which the upper wire guide 51 is required to deviate from the lower wire guide 14 along the V axis. The U axis drive system 81 includes a U axis deviation setting means (not shown) and a U axis driving motor control means (not shown). The V axis drive system 82 includes a V axis deviation setting means (not shown) and a V axis driving motor control means (not shown).

The U axis deviation setting means has a function to calculate and set the distance with which the upper wire guide 51 is required to deviate from the lower wire guide along the U axis, in response to a commanded inclination of the wire electrode 6 along the U axis and in response to a vertical distance between the upper wire guide 51 and the lower wire guide 14. The V axis deviation setting means has a function to calculate and set the distance with which the upper wire guide 51 is required to deviate from the lower wire guide along the V axis, in response to a commanded inclination of the wire elecrode 6 along the V axis and in response to a vertical distance between the upper wire guide 51 and the lower wire guide 14. The U axis driving motor control means has a function to drive the U axis driving motor 41 to move the upper wire guide 51 in the U axis direction by a distance which equals the U axis deviation commanded by the U axis deviation setting means. The V axis driving motor control means has a function to drive the V axis driving motor 31 to move the upper wire guide 51 in the V axis direction by a distance which equals the V axis deviation commanded by the V axis deviation setting means. The U axis drive system 81 and the V axis drive system 82 are usually combined in one system and the one combined system is made of a numerical control system.

Since the structure which supports the upper wire guide 51 is complicated and less rigid or rather elastic, it is inclined to deform, when a machining liquid is spouted from the upper wire guide 51 toward the work 2 and the reaction of the spouted machining liquid is applied to the lower surface of the upper wire guide 51. This deformation of the structure which supports the upper wire guide 51 readily causes displacement of the upper wire guide 51, resultantly causing a less degree of machining accuracy for a wire cutting electrical discharge machining apparatus.

JP-A-2059218 discloses a machining method which keeps a relative position between a wire and a work piece constant by premeasuring the displacement of an upper nozzle by dielectric fluid pressure before machining. DE-A-2900557 discloses a travelling wire electrical discharge machine in which wire advance is controlled to maintain the deflection of an arm constant.

The object of this invention is to provide a wire cutting electrical discharge machining apparatus which is equipped with a means for inclining a wire electrode to make the wire cutting electrical discharge machining apparatus employable for taper machining and which is improved to have good machining accuracy, in spite of displacement of an upper wire guide due to elastic deformation of the structure which supports the upper wire guide, such elastic deformation being caused by the reaction of a machining liquid spouted from the upper wire guide toward a work.

The foregoing object is achieved by either of the following wire cutting electrical discharge machining apparatus.

A wire cutting electrical discharge machining apparatus in accordance with the first embodiment of this invention is a wire cutting electrical discharge machining apparatus comprising a wire electrode (6) extending between a lower wire guide (14) supported by a lower wire guide supporting arm (13) supported by a column (11) and an upper wire guide (51) supported by an upper wire guide supporting arm (5) supported by a U axis table (4) slidably supported by a V axis saddle (3) slidably supported by the column (11), an X-Y table (12) slidable on a bed (1) to support a work (2), a U/V axes deviation setting means (71) for calculating and setting the deviation by which the upper wire guide (51) is deviated from the lower wire guide (14) along the U axis and the V axis, and a U/V axes driving motor control means (74) for driving a U axis driving motor (41) and a V axis driving motor (31) in response to the U/V axes deviation commanded by the U/V axes deviation setting means (71), characterised by either or both of a U axis strain gauge (53) plated on the lateral side surface of the upper wire guide supporting arm (5) for measuring the strain which occurs in the upper wire guide supporting arm (5) in the lateral direction, when seen from the front of the wire cutting electrical discharge machining apparatus and a V axis strain gauge (54) plated on the front or back surface of the upper wire guide supporting arm (5) for measuring the strain which occurs in the upper wire guide supporting arm (5) in the longitudinal direction when, seen from the front of the wire cutting electrical discharge machining apparatus, an upper wire guide displacement measuring means (72) for measuring the displacement of the upper wire guide (51) along the U axis and/or the V axis, and an upper wire guide deviation correction means (73) for correcting the U/V axes deviation commanded by the U/V axes deviation setting means (71) in response to the upper wire guide displacement measured by employing the upper wire guide displacement measuring means (72).

A wire cutting electrical discharge machining apparatus in accordance with the second embodiment of this invention is a wire cutting electrical discharge machining apparatus comprising a wire electrode (6) extending between a lower wire guide (14) supported by a lower wire guide supporting arm (13) supported by a column (11) and an upper wire guide (51) supported by an upper wire guide supporting arm (5) supported by a U axis table (4) slidably supported by a V axis saddle (3) slidably supported by the column (11), an X-Y table (12) slidable on a bed (1) to support a work (2), a U/V axes deviation setting means (71) for calculating and setting the deviation by which the upper wire guide (51) is deviated from the lower wire guide (14) along the U axis and the V axis, and a U/V axes driving motor control means (74) for driving a U axis driving motor (41) and a V axis driving motor (31) in response to the U/V axes deviation commanded by the U/V axes deviation setting means (71), characterised by a data base (75) memorizing the relations between the quantity of a machining liquid spouted from the upper wire guide (51) toward the work (2) and the distance between the lower end (52) of the upper wire guide (51) and the upper surface of the work (2) and the displacement of the upper wire guide (51), an upper wire guide displacement calculation means (76) for calculating the displacement of the upper wire guide (51) in response to the quantity of the machining liquid and the distance between the lower end (52) of the upper wire guide (51) and the upper surface of the work (2) by employing the table look-up method which is conducted by employing the foregoing data base (75), and an upper wire guide deviation correction means (73) for correcting the U/V axes deviation commanded by the U/V axes deviation setting means (71) in response to the upper wire guide displacement calculated by the upper wire guide displacement calculation means (76).

This invention, together with its various features and advantages, can be readily understood from the following more detailed description presented in conjunction with the following drawings, in which :
Fig. 1 is a side view of a wire cutting electrical discharge machining apparatus equipped with a means for inclining a wire electrode and which is available in the prior art,
Fig. 2 is a side view of a wire cutting electrical discharge machining apparatus equipped with a means for inclining a wire electrode in accordance with the first embodiment of this invention,
Fig. 3 is a side view of a wire cutting electrical discharge machining apparatus equipped with a means for inclining a wire electrode in accordance with the second embodiment of this invention, and
Fig. 4 is a graph illustrating the relations between the displacement which occurs in an upper wire guide in the longitudinal direction (back and forth, when seen from the front of a wire cutting electrical discharge machining apparatus) and the quantity of a machining liquid, employing the distance (L) between the lower end of the upper wire guide and the upper surface of a work, as a parameter.

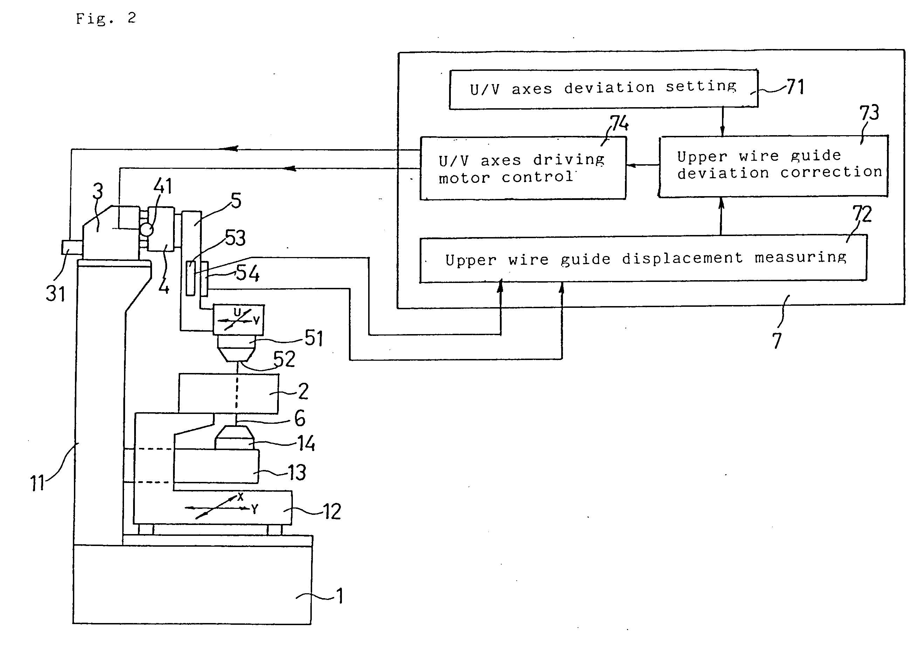

Referring to Figs. 2, 3 and 4, a detailed description will be presented below for wire cutting electrical discharge machining apparatus in accordance with two embodiments of this invention.

### FIRST EMBODIMENT

Referring to Fig. 2, an X-Y table 12 is allowed to move on a bed 1 and supports a work 2 thereon. A lower wire guide supporting arm 13 extends from a column 11 in the horizontal direction to support a lower wire guide 14. A machining liquid is spouted from the upper end (not marked) of the lower wire guide 14 upward toward the work 2. A V axis saddle 3 is allowed to horizontally move on the top of the column 11 along the V axis or from side to side in the drawing (back and forth, when seen from the front). The V axis saddle 3 is driven by a V axis driving motor 31. A U axis table 4 is allowed to vertically move along the side of the V axis saddle 3 in the direction along the U axis or back and forth in the drawing (from side to side, when seen from the front). The U axis table 4 is driven by a U axis driving motor 41. An upper wire guide supporting arm 5 supported by the U axis table 4 extends in the forward and downward direction (when seen from the front) to support an upper wire guide 51. A machining liquid is spouted from the lower end 52 of the upper wire guide 51 downward toward the work 2. A wire electrode 6 is extended between the upper wire guide 51 and the lower wire guide 14.

A U axis strain gauge 53 is plated on the side of the upper wire guide supporting arm 5 to measure the strain which occurs in the upper wire guide supporting arm 5 in the transverse direction, when seen from the front or along the U axis. A V axis strain gauge 54 is plated on the front or back surface of the upper wire guide supporting arm 5 to measure the strain which occurs in the upper wire guide supporting arm 5 in the longitudinal direction when, seen from the front or along the V axis.

A numerical control apparatus 7 which controls the foregoing wire cutting electrical discharge machining apparatus proper includes a U/V axes deviation setting means 71, an upper wire guide displacement measuring means 72, an upper wire guide deviation correction means 73 and a U/V axes driving motor control means 74.

The U/V axes deviation setting means 71 has a function to calculate deviation by which the upper wire guide 51 must be deviated from the lower wire guide 14 for the purpose to incline the wire electrode 6 along the U axis and the V axis for producing a finished work 2 having a desired tapered shape. The upper wire guide displacement measuring means 72 has a function to determine the displacement of the upper wire guide 51 along the U axis and the V axis in response to the U axis strain and the V axis strain respectively detected by the U axis strain gauge 53 and the V axis strain gauge 54. The upper wire guide deviation correction means 73 has a function to correct the U/V axes deviation commanded by the U/V axes deviation setting means 71 in response to the upper wire guide displacement measured by the upper wire guide displacement measuring means 72. The U/V axes driving motor control means 74 has a function to control the U axis driving motor 41 and the V axis driving motor 31 in response to the corrected U/V axes deviation outputted by the upper wire guide deviation correction means 73.

Due to the reaction of the machining liquid spouted from the upper wire guide 51 toward the work 2, the upper wire guide 51 slightly displaces along the U axis and the V axis. However, since the wire cutting electrical discharge machining apparatus in accordance with the first embodiment of this invention has a means for correcting the U/V axes deviation calculated and commanded by the U/V axes deviation setting means 71 by the displacement which occurs in the upper wire guide 51 which displacement is determined by the upper wire guide displacement measuring means 72, the wire cutting electrical discharge machining apparatus in accordance with the first embodiment of this invention is allowed to have very good machining accuracy.

Since the U axis displacement is generally small, the means for correcting the U axis displacement is not necessarily essential. In this case, the U axis strain gauge 53 is not necessary, and the U axis component is not necessary for the upper wire guide displacement measuring means 72 and the upper wire guide deviation correction means 73.

### SECOND EMBODIMENT

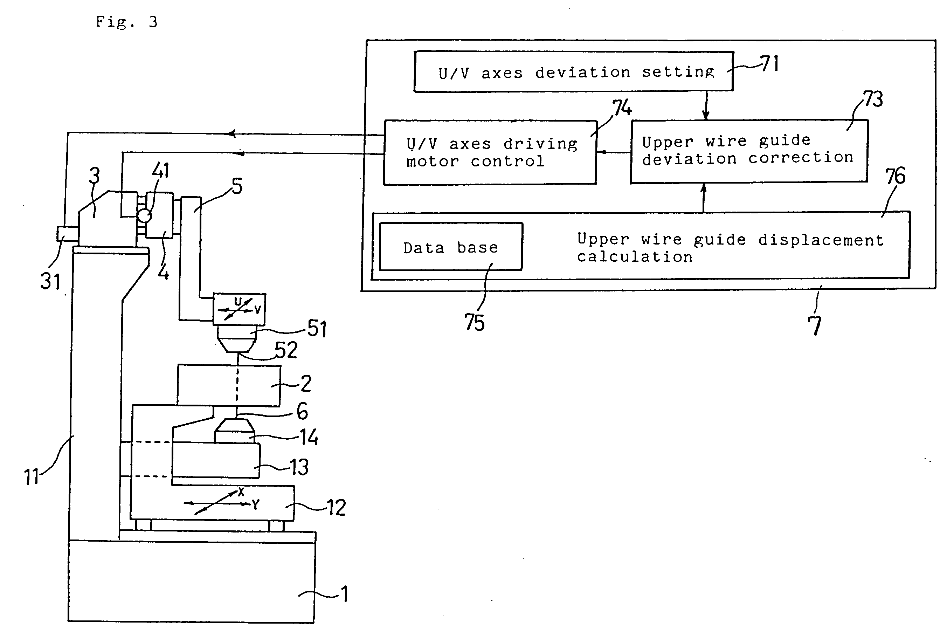

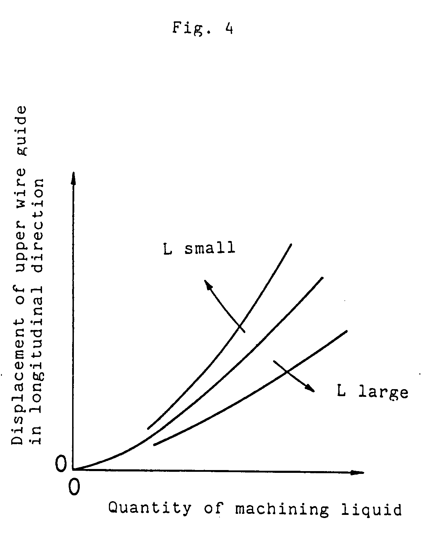

Referring to Figs. 3 and 4, an X-Y table 12 is allowed to move on a bed 1 and supports a work 2 thereon. A lower wire guide supporting arm 13 extends from a column 11 in the horizontal direction to support a lower wire guide 14. A machining liquid is spouted from the upper end (not marked) of the lower wire guide 14 upward toward the work 2. A V axis saddle 3 is allowed to horizontally move on the top of the column 11 along the V axis or from side to side in the drawing (back and forth, when seen from the front). The V axis saddle 3 is driven by a V axis driving motor 31. A U axis table 4 is allowed to vertically move along the side of the V axis saddle 3 in the direction along the U axis or back and forth in the drawing (from side to side, when seen from the front). The U axis table 4 is driven by a U axis driving motor 41. An upper wire guide supporting arm 5 supported by the U axis table 4 extends in the forward (when seen from the front) and downward direction to support an upper wire guide 51. A machining liquid is spouted from the lower end 52 of the upper wire guide 51 downward toward the work 2. A wire electrode 6 is extended between the upper wire guide 51 and the lower wire guide 14.

A numerical control apparatus 7 which controls the foregoing wire cutting electrical discharge machining apparatus proper includes a U/V axes deviation setting means 71, a data base 75, an upper wire guide displacement calculation means 76, an upper wire guide deviation correction means 73 and a U/V axes driving motor control means 74.

The U/V axes deviation setting means 71 has a function to calculate the deviation by which the upper wire guide 51 must be deviated from the lower wire guide 14 for the purpose to incline the wire electrode 6 along the U axis and the V axis for producing a finished work 2 having a desired tapered shape. The data base 75 memorizes the relations between the quantity of a machining liquid spouted from the upper wire guide 51 toward the work 2 and the distance between the lower end 52 of the upper wire guide 51 and the upper surface of the work 2 and the displacement to be occurred in the upper wire guide 51 which displacement is caused by the reaction of the machining liquid spouted from the upper wire guide 51 toward the work 2. As is shown in Fig. 4, the upper wire guide displacement increases in response to an increase in the quantity of a machining liquid and in response to a decrease in the distance (L) between the lower end of an upper wire guide and the upper surface of a work. The upper wire guide displacement calculation means 76 has a function to calculate the displacement which occurs in response to the quantity of the machining liquid and the distance between the lower end 52 of the upper wire guide 51 and the upper surface of the work 2 by employing the table look-up method which is conducted by employing the data base 75. The upper wire guide deviation correction means 73 has a function to correct the U/V axes deviation commanded by the U/V axes deviation setting means 71 in response to the upper wire guide displacement calculated by the upper wire guide displacement calculation means 76. The U/V axes driving motor control means 74 has a function to control the U axis driving motor 41 and the V axis driving motor 31 in response to the corrected U/V axes deviation outputted by the upper wire guide deviation correction means 73.

Due to the reaction of the machining liquid spouted from the upper wire guide 51 toward the work 2, the upper wire guide 51 slightly displaces along the U axis and the V axis. However, since the wire cutting electrical discharge machining apparatus in accordance with the second embodiment of this invention has a means for correcting the U/V axes deviation calculated and commanded by the U/V axes deviation setting means 71 by the displacement which occurs in the upper wire guide 51 which displacement is determined by the upper wire guide displacement measuring means 72, the wire cutting electrical discharge machining apparatus in accordance with the second embodiment of this invention is allowed to have very good machining accuracy.

The above description has clarified that a wire cutting electrical discharge machining apparatus which is equipped with a means for inclining a wire electrode and which is accurate in machining, in spite of displacement which occors in an upper wire guide due to elastic deformation of the structure which supports the upper wire guide, is successfully provided by this invention.

## Claims

1. A wire cutting electrical discharge machining apparatus comprising :
a wire electrode (6) extending between a lower wire guide (14) supported by a lower wire guide supporting arm (13) supported by a column (11) and an upper wire guide (51) supported by an upper wire guide supporting arm (5) supported by a U axis table (4) slidably supported by a V axis saddle (3) slidably supported by said column (11),
an X-Y table (12) slidable on a bed (1) to support a work (2),
a U/V axes deviation setting means (71) for calculating and setting the deviation by which said upper wire guide (51) is deviated from said lower wire guide (14) along a U axis and a V axis, and
a U/V axes driving motor control means (74) for driving a U axis driving motor (41) and a V axis driving motor (31) in response to the U/V axes deviation commanded by said U/V axes deviation setting means (71),
characterized by further comprising :
a V axis strain gauge (54) for measuring the strain which occurs in said upper wire guide supporting arm (5) in the longitudinal direction, when seen from the front of said wire cutting electrical discharge machining apparatus, an upper wire guide displacement measuring means (72) for measuring the displacement of said upper wire guide (51) along the V axis, and
an upper wire guide deviation correction means (73) for correcting the U/V axes deviation commanded by said U/V axes deviation setting means (71) in response to the upper wire guide displacement along the V axis measured by employing said upper wire guide displacement measuring means (72).

2. A wire cutting electrical discharge machining apparatus in accordance with claim 1,
wherein said V axis strain gauge (54) is plated on the front or back surface of said upper wire guide supporting arm (5).

3. A wire cutting electrical discharge machining apparatus in accordance with claim 1,
wherein said V axis strain gauge (54) is plated on the top surface of said upper wire guide supporting arm (5).

4. A wire cutting electrical discharge machining apparatus in accordance with claim 1, 2 or 3, further comprising :
a U axis strain gauge (53) for measuring the strain which occurs in said upper wire guide supporting arm (5) in the lateral direction, when seen from the front of said wire cutting electrical discharge machining apparatus, and wherein
said upper wire guide displacement measuring means (72) and said upper wire guide deviation correction means (73) further comprising :
a component for the U axis.

5. A wire cutting electrical discharge machining apparatus in accordance with claim 4,
wherein said U axis strain gauge (53) is plated on the lateral side surface of said upper wire guide supporting arm (5).

6. A wire cutting electrical discharge machining apparatus comprising :
a wire electrode (6) extending between a lower wire guide (14) supported by a lower wire guide supporting arm (13) supported by a column (11) and an upper wire guide (51) supported by an upper wire guide supporting arm (5) supported by a U axis table (4) slidably supported by a V axis saddle (3) slidably supported by said column (11),
an X-Y table (12) slidable on a bed (1) to support a work (2),
a U/V axes deviation setting means (71) for calculating and setting the deviation by which said upper wire guide (51) is deviated from said lower wire guide (14) along a U axis and a V axis, and
a U/V axes driving motor control means (74) for driving a U axis driving motor (41) and a V axis driving motor (31) in response to the U/V axes deviation commanded by said U/V axes deviation setting means (71),
characterized by further comprising :
a data base (75) memorizing the relations between the quantity of a machining liquid spouted from said upper wire guide (51) toward said work (2) and the distance between the lower end (52) of said upper wire guide (51) and the upper surface of said work (2) and the displacement of said upper wire guide (51) along a V axis,
an upper wire guide displacement calculation means (76) for calculating the V axis displacement of said upper wire guide (51) in response to the quantity of the machining liquid and the distance between the lower end (52) of said upper wire guide (51) and the upper surface of said work (2) by employing the table look-up method which is conducted by employing said data base (75), and
an upper wire guide deviation correction means (73) for correcting the V axis deviation commanded by said U/V axes deviation setting means (71) following the upper wire guide displacement along the V axis calculated by said upper wire guide displacement calculation means (76).

7. A wire cutting electrical discharge machining apparatus in accordance with claim 6,
wherein said data base (75), said upper wire guide displacement calculation means (76) and said upper wire guide deviation correction means (73) further comprising a component for the U axis.

## Patentansprüche

1. Funkenerosionsdrahtschneidemaschine, die folgendes umfaßt:
eine Drahtelektrode (6), die sich erstreckt zwischen einer unteren Drahtführung (14), die von einem von einer Säule (11) getragenen Tragarm (13) für die untere Drahtführung getragen wird, und einer oberen Drahtführung (51), die von einem Tragarm (5) für die obere Drahtführung getragen wird, der von einem U-Achsen-Tisch (4) getragen wird, der von einem V-Achsen-Sattel (3) gleitend getragen wird, der von der Säule (11) gleitend getragen wird,
einen auf einem Bett (1) gleitenden X-Y-Tisch (12) zum Tragen eines Werkstücks (2),
ein U/V-Achsen-Abweichungseinstellungsmittel (71) zum Berechnen und Einstellen der Abweichung, um die die obere Drahtführung (51) entlang einer U-Achse und einer V-Achse von der unteren Drahtführung (14) wegbewegt wird, und
ein U/V-Achsen-Antriebsmotorsteuerungsmittel (74) zum Ansteuern eines U-Achsen-Antriebsmotors (41) und eines V-Achsen-Antriebsmotors (31) als Reaktion auf die von dem U/V-Achsen-Abweichungseinstellungsmittel (71) angeordnete U/V-Achsen-Abweichung,
gekennzeichnet dadurch, daß sie weiterhin folgendes umfaßt:
einen V-Achsen-Dehnungsmesser (54) zum Messen der Beanspruchung, die in dem Tragarm (5) für die obere Drahtführung bei Betrachtung der Funkenerosionsdrahtschneidemaschine von der Vorderseite aus in Längsrichtung auftritt,
ein Verschiebungsmessungsmittel (72) für die obere Drahtführung zum Messen der Verschiebung der oberen Drahtführung (51) entlang der V-Achse und
ein Verschiebungskorrekturmittel (73) für die obere Drahtführung zum Korrigieren der U/V-Achsen-Abweichung, angeordnet von dem U/V-Achsen-Abweichungseinstellungsmittel (71) als Reaktion auf die Verschiebung der oberen Drahtführung entlang der V-Achse, gemessen durch Einsatz des Verschiebungsmessungsmittel (72) für die obere Drahtführung.

2. Funkenerosionsdrahtschneidemaschine nach Anspruch 1,
bei der der V-Achsen-Dehnungsmesser (54) auf die vordere oder hintere Fläche des Tragarms (5) für die obere Drahtführung plattiert ist.

3. Funkenerosionsdrahtschneidemaschine nach Anspruch 1,
bei der der V-Achsen-Dehnungsmesser (54) auf die obere Fläche des Tragarms (5) für die obere Drahtführung plattiert ist.

4. Funkenerosionsdrahtschneidemaschine nach Anspruch 1, 2 oder 3, die weiterhin folgendes umfaßt:
einen U-Achsen-Dehnungsmesser (53) zum Messen der Beanspruchung, die in dem Tragarm (5) für die obere Drahtführung bei Betrachtung der Funkenerosionsdrahtschneidemaschine von der Vorderseite aus in seitlicher Richtung auftritt, und
wobei das Verschiebungsmessungsmittel (72) für die obere Drahtführung und das Verschiebungskorrekturmittel (73) für die obere Drahtführung weiterhin eine Komponente für die U-Achse umfassen.

5. Funkenerosionsdrahtschneidemaschine nach Anspruch 4,
bei dem der U-Achsen-Dehnungsmesser (53) auf die seitliche Seitenfläche des Tragarms (5) für die obere Drahtführung plattiert ist.

6. Funkenerosionsdrahtschneidemaschine, die folgendes umfaßt:
eine Drahtelektrode (6), die sich erstreckt zwischen einer unteren Drahtführung (14), die von einem von einer Säule (11) getragenen Tragarm (13) für die untere Drahtführung getragen wird, und einer oberen Drahtführung (51), die von einem Tragarm (5) für die obere Drahtführung getragen wird, der von einem U-Achsen-Tisch (4) getragen wird, der von einem V-Achsen-Sattel (3) gleitend getragen wird, der von der Säule (11) gleitend getragen wird,
einen auf einem Bett (1) gleitenden X-Y-Tisch (12) zum Tragen eines Werkstücks (2),
ein U/V-Achsen-Abweichungseinstellungsmittel (71) zum Berechnen und Einstellen der Abweichung, um die die obere Drahtführung (51) entlang einer U-Achse und einer V-Achse von der unteren Drahtführung (14) wegbewegt wird, und
ein U/V-Achsen-Antriebsmotorsteuerungsmittel (74) zum Ansteuern eines U-Achsen-Antriebsmotors (41) und eines V-Achsen-Antriebsmotors (31) als Reaktion auf die von dem U/V-Achsen-Abweichungseinstellungsmittel (71) angeordnete U/V-Achsen-Abweichung,
dadurch gekennzeichnet, daß sie weiterhin folgendes umfaßt:
eine Datenbank (75), die die Beziehungen zwischen der Menge einer von der oberen Drahtführung (51) zu dem Werkstück (2) herausgespritzten Bearbeitungsflüssigkeit und der Entfernung zwischen dem unteren Ende (52) der oberen Drahtführung (51) und der oberen Fläche des Werkstücks (2) und der Verschiebung der oberen Drahtführung (51) entlang einer V-Achse speichert,
ein Verschiebungsberechnungsmittel (76) für die obere Drahtführung zum Berechnen der V-Achsen-Verschiebung der oberen Drahtführung (51) als Reaktion auf die Menge der Bearbeitungsflüssigkeit und die Entfernung zwischen dem unteren Ende (52) der oberen Drahtführung (51) und der oberen Fläche des Werkstücks (2) durch Einsatz des Tabellennachschlageverfahrens, das durch Einsatz der Datenbank (75) durchgeführt wird, und
ein Verschiebungskorrekturmittel (73) für die obere Drahtführung zum Korrigieren der V-Achsen-Abweichung, die von dem U/V-Achsen-Abweichungseinstellungsmittel (71) als Reaktion auf die von dem Verschiebungsberechnungsmittel (76) für die obere Drahtführung berechnete Verschiebung der oberen Drahtführung entlang der V-Achse angeordnet wurde.

7. Funkenerosionsdrahtschneidemaschine nach Anspruch 6,
bei der die Datenbank (75), das Verschiebungsberechnungsmittel (76) für die obere Drahtführung und das Verschiebungskorrekturmittel (73) für die obere Drahtführung weiterhin eine Komponente für die U-Achse umfassen.

## Revendications

1. Appareil de découpage par électroérosion à l'aide d'un fil, comprenant:
un fil-électrode (6) s'étendant entre un guide-fil inférieur (14) supporté par un bras de support de guide-fil inférieur (13) supporté par une colonne (11) et un guide-fil supérieur (51) supporté par un bras de support de guide-fil supérieur (5) supporté par une table (4) à axe U supportée en coulissement par un serre-fil (3) à axe V supporté en coulissement par ladite colonne (11),
une table X-Y (12) apte à coulisser sur un lit (1) pour supporter une pièce à usiner (2),
un moyen de réglage (71) de la déviation des axes U/V pour calculer et régler la déviation par laquelle ledit guide-fil supérieur (51) est dévié par rapport audit guide-fil inférieur (14) le long d'un axe U et le long d'un axe V, et
un moyen de commande (74) des moteurs d'entraînement des axes U/V pour entraîner un moteur d'entraînement (41) de l'axe U et un moteur d'entraînement (31) de l'axe V en réponse à la déviation des axes U/V commandée par ledit moyen de réglage (71) de la déviation desdits axes U/V,
caractérisé par le fait qu'il comprend en outre:
une jauge de contrainte (54) à axe V pour mesurer la contrainte qui apparaît dans ledit bras de support (5) du guide-fil supérieur dans la direction longitudinale lorsqu'on regarde à partir d'une vue frontale dudit appareil de découpage par électroérosion à l'aide d'un fil,
un moyen de mesure (72) du déplacement du guide-fil supérieur pour mesurer le déplacement dudit guide-fil supérieur (51) le long de l'axe V, et
un moyen de correction (73) de la déviation du guide-fil supérieur pour corriger la déviation des axes U/V commandée par ledit moyen de réglage (71) de la déviation des axes U/V en réponse au déplacement du guide-fil supérieur le long de l'axe V mesuré en utilisant ledit moyen de mesure (72) de déplacement du guide-fil supérieur.

2. Appareil de découpage par électroérosion à l'aide d'un fil selon la revendication 1,
dans lequel ladite jauge de contrainte (54) à axe V est plaquée sur la surface frontale ou dorsale dudit bras de support (5) du guide-fil supérieur.

3. Appareil de découpage par électroérosion à l'aide d'un fil selon la revendication 1,
dans lequel ladite jauge de contrainte (54) à axe V est plaquée sur la surface supérieure dudit bras de support (5) du guide-fil supérieur.

4. Appareil de découpage par électroérosion à l'aide d'un fil selon la revendication 1, 2 ou 3, comprenant en outre:
une jauge de contrainte à axe U (53) pour mesurer la contrainte qui apparaît dans ledit bras de support (5) du guide-fil supérieur dans la direction latérale, lorsqu'on regarde à partir d'une vue frontale dudit appareil de découpage par électroérosion à l'aide d'un fil, et dans lequel
ledit moyen de mesure (72) du déplacement du guide-fil supérieur et ledit moyen de correction (73) de la déviation du guide-fil supérieur comprennent en outre: un composant pour l'axe U.

5. Appareil de découpage par électroérosion à l'aide d'un fil selon la revendication 4,
dans lequel la jauge de contrainte (53) à axe U est plaquée sur la surface latérale dudit bras de support (5) du guide-fil supérieur.

6. Appareil de découpage par électroérosion à l'aide d'un fil, comprenant:
un fil-électrode (6) s'étendant entre un guide-fil inférieur (14) supporté par un bras de support de guide-fil inférieur (13) supporté par une colonne (11) et un guide-fil supérieur (51) supporté par un bras de support de guide-fil supérieur (5) supporté par une table (4) à axe U supportée en coulissement par un serre-fil (3) à axe V supporté en coulissement par ladite colonne (11),
une table X-Y (12) apte à coulisser sur un lit (1) pour supporter une pièce à usiner (2),
un moyen de réglage (71) de la déviation des axes U/V pour calculer et régler la déviation par laquelle ledit guide-fil supérieur (51) est dévié par rapport audit guide-fil inférieur (14) le long d'un axe U et le long d'un axe V, et
un moyen de commande (74) des moteurs d'entraînement des axes U/V pour entraîner un moteur d'entraînement (41) de l'axe U et un moteur d'entraînement (31) de l'axe V en réponse à la déviation des axes U/V commandée par ledit moyen de réglage (71) de la déviation des axes U/V,
caractérisé par le fait qu'il comprend en outre:
une base de données (75) qui mémorise les relations entre la quantité de liquide d'usinage qui jaillit dudit guide-fil supérieur (51) en direction de la dite pièce à usiner (2), et la distance entre l'extrémité inférieure (52) dudit guide-fil supérieur (51) et la surface supérieure de ladite pièce à usiner (2), ainsi que le déplacement dudit guide-fil supérieur (51) le long d'un axe V,
un moyen de calcul (76) du déplacement du guide-fil supérieur pour calculer le déplacement de l'axe V dudit guide-fil supérieur (51) en réponse à la quantité du liquide d'usinage et la distance entre l'extrémité inférieure (52) dudit guide-fil supérieur (51) et la surface supérieure de ladite pièce à usiner (2) en utilisant le procédé de consultation de tables que l'on effectue en utilisant ladite base de données (75), et un moyen de correction (73) de la déviation du guide-fil supérieur pour corriger la déviation de l'axe V commandée par ledit moyen de réglage (71) de la déviation des axes U/V suite au déplacement du guide-fil supérieur le long de l'axe V calculé par ledit moyen de calcul (76) du déplacement du guide-fil supérieur.

7. Appareil de découpage par électroérosion à l'aide d'un fil selon la revendication 6,
dans lequel ladite base de données (75), ledit moyen de calcul (76) du déplacement du guide-fil supérieur et ledit moyen de correction (73) de la déviation du guide-fil supérieur comprennent en outre un composant pour l'axe U.
